# EUROPEAN PATENT APPLICATION

(11) **EP 4 742 194 A1**
(43) Date of publication of application: **13.05.2026**
(21) Application number: 25213670.0
(22) Date of filing: 05.11.2025
(51) Int. Cl.: G06V 20/59, G06V 20/56, G06V 40/10, G06V 40/16, G06V 10/82

(54) **METHOD AND APPARATUS FOR GENERATING IMAGE, DEVICE AND PRODUCT**

(30) Priority: 06.11.2024 CN 202411578638
(71) Applicant: Cariad (China) Co., Ltd., Beijing 100028 (CN)
(72) Inventor: LIN, Nan, Beijing, 100028 (CN); LIU, Yang, Beijing, 100028 (CN); WANG, Liyao, Beijing, 100028 (CN); DUAN, Ning, Beijing, 100028 (CN)
(74) Representative: Müller-Boré & Partner Patentanwälte PartG mbB

(57) **Abstract**

The present disclosure relates to a method and an apparatus for generating an image, a device, and a product. The method (300) includes: determining (302) a plurality of corresponding image layers based on images of interior and exterior environments of a vehicle, where spatial relationships of the plurality of image layers are different. The method (300) further includes generating (304), by an image generation model and based on the plurality of image layers, a corresponding image according to a status of a vehicle and/or information input by a user. In this way, in conjunction with a user input, a vehicle status, and surroundings of the vehicle, an image matching the user's intention and the vehicle environment can be generated, which can improve the user experience.

## Description

### FIELD

The present disclosure generally relates to the technical field of vehicles, and more specifically, to a method and an apparatus for generating an image, a device and a product.

### BACKGROUND

With the rapid development of vehicle technology and artificial intelligence, vehicles have become necessities for people in daily life. During driving, users often come across beautiful scenery, or desire to record the travel mood and feelings at some moments. Meanwhile, text-to-text, text-to-picture and picture-to-picture generation technologies, and the like have been widely applied to vehicles. The users have increasingly higher expectations for entertainment functions of in-vehicle systems. For example, users are particularly fond of personalized, smart image generation services.

### SUMMARY

The embodiments of the present disclosure provide a method and an apparatus for generating an image, a device, and a product.

In a first aspect of the present disclosure, there is provided a method for generating an image. The method includes determining a plurality of corresponding image layers based on images of interior and exterior environments of a vehicle, where spatial relationships of the plurality of image layers are different. The method further includes generating, by an image generation model and based on the plurality of image layers, a corresponding image according to a status of a vehicle and/or information input by a user.

In a second aspect of the present disclosure, there is provided an apparatus for generating an image. The apparatus includes an image layer determining module configured to determine, based on images of interior and exterior environments of a vehicle, a plurality of corresponding image layers, where spatial relationships of the plurality of image layers are different. The apparatus further includes an image generation module configured to generate, by the image generation model and based on the plurality of image layers, a corresponding image according to a status of a vehicle and/or information input by a user.

In a third aspect of the present disclosure, there is provided an electronic device. The electronic device includes: one or more processors; and a memory for storing one or more programs, where the one or more programs, when executed by the one or more processors, cause the one or more processors to perform the method provided in the first aspect of the present disclosure.

In a fourth aspect of the present disclosure, there is provided a computer readable storage medium. The computer readable storage medium has computer executable instructions stored thereon, where the computer executable instructions are executed by a processor to implement the method provided in the first aspect of the present disclosure.

In a fifth aspect of the present disclosure, there is provided a computer program product tangibly stored on a computer readable medium and comprising machine executable instructions that, when executed, implement the method provided in the first aspect of the present disclosure.

It would be appreciated that this Summary is not intended to identify key features or essential features of the embodiments of the present disclosure, nor is it intended to be used to limit the scope of the present disclosure. Other features of the present disclosure will become evident through the following description.

### BRIEF DESCRIPTION OF THE DRAWINGS

Through the following detailed description with reference to the accompanying drawings, the above and other objectives, features, and advantages of example embodiments of the present disclosure will become more apparent. In the drawings, the same or similar reference symbols refer to the same or similar elements, where:
Fig. 1 illustrates a schematic diagram of an example environment where a plurality of embodiments of the present disclosure can be implemented;
Fig. 2 illustrates a schematic diagram of a process of generating an image according to some embodiments of the present disclosure;
Fig. 3 illustrates a flowchart of a method for generating an image according to some embodiments of the present disclosure;
Fig. 4 illustrates a schematic diagram of determining a plurality of image layers according to some embodiments of the present disclosure;
Fig. 5 illustrates a schematic diagram of adjusting a plurality of image layers according to some embodiments of the present disclosure;
Fig. 6 illustrates a block diagram of an apparatus for generating an image according to some embodiments of the present disclosure; and
Fig. 7 illustrates a block diagram of a device that can implement a plurality of embodiments of the present disclosure.

### DETAILED DESCRIPTION OF EMBODIMENTS

Reference below will be made to the drawings to describe in detail the embodiments of the present disclosure. Although some embodiments disclosed herein are depicted in the drawings, it would be appreciated that the present disclosure can be implemented in various manners and should not be limited to the embodiments described herein. Rather, those embodiments are provided merely to describe the present disclosure thoroughly and completely. It would be appreciated that the drawings and embodiments of the present disclosure are provided only as examples and are not intended for limiting the scope disclosed herein in any manner.

As used herein, the term "includes" and its variants are to be read as open-ended terms that mean "includes, but is not limited to." The term "based on" is to be read as "based at least in part on." The term "an embodiment" or "the embodiment" is to be read as "at least one example embodiment." The term "first," "second" or the like can represent different or the same objects. Other definitions, either explicit or implicit, may be included below.

As described above, with the development of vehicle technology and artificial intelligence, users are no longer satisfied with only taking photos to record beautiful scenery during traveling, or mood or feelings at a moment. The users have a stronger desire to process images according to their own needs, generate more personalized images, and record their mood and feelings at a moment.

By far, artificial intelligence has been applied to vehicles to implement an Artificial Intelligence (AI) drawing function. For example, an in-vehicle system can directly call an existing "Text-to-Image" API, to satisfy the need of generating, in a vehicle, an image based on a user's speech instruction. However, images generated according to the current solutions are not "personalized" as lacking relevance to users and traveling scenarios, or the current solutions cannot meet the users' requirements for images and provide the users with images irrelevant to them.

To this end, embodiments of the present disclosure provide a method for generating an image. In the embodiments of the present disclosure, the method includes determining a plurality of corresponding image layers based on images of interior and exterior environments of a vehicle, where spatial relationships of the plurality of image layers are different. The method further includes generating, by an image generation model and based on the plurality of image layers, a corresponding image according to a status of the vehicle and information input by a user.

In this way, in conjunction with the multi-view images about the interior and exterior of the vehicle and the status information of the vehicle, a variety of materials and reference bases can be provided for image generation. In addition, user input information can be taken into consideration in the process of image generation, which allows for further customization of images, thus making it better meet the user's needs and be more in line with the user preferences. Since a plurality of image layers can provide materials for image generation from multiple dimensions, existence of the plurality of image layers enable image generation or adjustment to be more flexible and targeted.

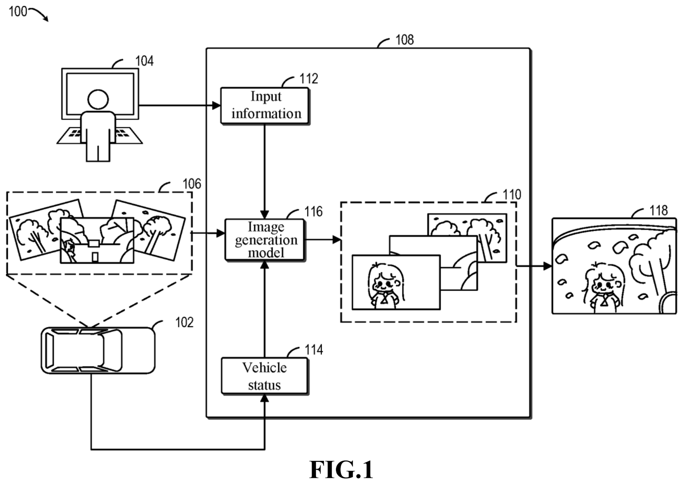

Fig. 1 illustrates a schematic diagram of an example environment 100 where a plurality of embodiments of the present disclosure can be implemented. As shown therein, in the example environment 100, there are provided a vehicle 102, a user terminal 104, and images 106 of interior and exterior environments of the vehicle. In the example environment 100, there is also a processor 108 in communication with the vehicle 102. According to the embodiments of the present disclosure, the vehicle 102 refers to any type of movable motorized or non-motorized vehicle that can carry people and/or objects. As shown therein, the vehicle 102 is a car. It would be appreciated that, although the vehicle 102 is shown as a car in Fig. 1, this is only an example, rather than a limitation, and examples thereof may further include: a bus, a truck, a motorcycle, an electric bicycle, and the like. In some embodiments of the present disclosure, the processor 108 can be implemented as various service terminals with a computing capability. Wherein, the service terminals may be servers, large computing devices, or the like, provided by various service providers.

In the example environment 100, various types of sensors can be deployed inside and outside the vehicle 102, to sense the interior environment and the surroundings of the vehicle. Wherein, the sensors may include, but are not limited to, visual sensors (e.g., cameras, and the like), millimeter wave radars, lidars, infrared sensors, global positioning systems, ultrasonic sensors, inertial measurement units, and the like. The visual sensors can capture images of the surroundings and the interior environment of the vehicle 102, to obtain interior and exterior images of the vehicle. For example, the visual sensors can capture images 106 of the surroundings and the interior environment of the vehicle 102.

In some embodiments of the present disclosure, the images 106 may include a plurality of image layers, which may include, for example, an interior environment image layer of a vehicle, an exterior environment image layer of a vehicle, an in-vehicle person image layer, and the like. Different image layers are different in spatial relationship and may be from different visual sensors. The images 106 can provide rich information on the interior and exterior environments of a vehicle by combining or overlaying the plurality of image layers. The spatial relationships between the image layers can be used to display actual layouts and movement of people inside and outside the vehicle. Wherein, the interior environment image layer of the vehicle can be used to indicate an environment inside the vehicle, for example, interior devices such as seats, the steering wheel, the instrument panel, and the like, inside the vehicle 102. The interior environment image layer of the vehicle can be arranged with reference to the interior space of the vehicle 102, and the position relationships between respective elements in the image layer can reflect the actual layout inside the vehicle, and other information. The exterior environment image layer of the vehicle may include information on an environment in different directions, for example, front, left, right, and the like, of the vehicle 102. The respective elements in the exterior environment image layer of the vehicle are associated with the exterior space of the vehicle, to reflect the relative position relationship between the vehicle and the exterior environment. For instance, the exterior environment image of the vehicle may include buildings, pedestrians, other vehicles, and the like, on the left side of the vehicle.

In some embodiments of the present disclosure, the in-vehicle person image may include an image corresponding to vehicle users, for example, an image including a driver captured by a camera on the steering wheel. In other embodiments, the image 106 may further include an image acquired by terminal devices corresponding to the vehicle users, for example, an image of the exterior environment of the vehicle captured by a terminal device, or an image taken by the vehicle user using a terminal device.

In some embodiments of the present disclosure, a plurality of image layers can be input into the processor 108, and the processor 108 can generate a corresponding image 118 based on the plurality of image layers. Wherein, the processor 108 may have a generative model 116 deployed therein, which may be an image generation model. The image generation model may be a generative model for generating an image, which has been trained using a large amount of training data. An image generation model may include various types of models, which may include, for example, but are not limited to, Generative Adversarial Networks (GANs), Variational Autoencoders (VAEs), Diffusion Models, and the like. Those models can capture a distribution of image data through different mechanisms, for example, adversarial training, probabilistic models, progressive denoising, or the like, to generate new realistic images. In other words, the plurality of image layers can act as an inference basis of the image generation models.

In some embodiments of the present disclosure, in order to further personalize and diversify the generated image 118 and make it more in line with the actual driving state of the vehicle, various reference information can be input into the processor 108 as a further basis for the image generation model 116 to generate an image, where the various reference information may include, but is not limited to, a vehicle status 114, information input by a user 112, weather information (e.g., sunny or rainy day, temperature or humidity), geographic location information (e.g., a current geographic location of the vehicle), and the like. Wherein, the information input by the user may be used to represent a user need. For example, according to the actual condition, a user can input a need (e.g., a desired style of an image to be generated, a specific element to be added, mood, or the like) via the user terminal 104. In an example, the user can input his/her need using multiple input methods such as speech, text, gesture, scanning, touch, and the like.

In some embodiments of the present disclosure, the vehicle status 114 may include traveling data (e.g., a traveling speed, an acceleration, a battery level, and the like), driving data (e.g., a turning angle of the steering wheel, a pressure applied to the brake pedal, and the like), vehicle control unit data (e.g., whether a window/door is open, a color of ambient light, a temperature/fan speed of an air conditioner, and the like), and media resource data (music, video, and the like, that can be played by an in-vehicle system).

In some embodiments of the present disclosure, the image generation model 116 can directly generate an image 118 in line with the user need based on various reference information and the plurality of image layers. In other embodiments, the image generation model 116 can also generate candidate images 110 based on the plurality of image layers. The candidate images 110 are adjusted based on various reference information, to generate the corresponding image 118. The adjustment may be directed to the candidate images 110 or a part of the image layers of the candidate images 110. Those image layers correspond to the plurality of original image layers.

In this way, images acquired by the vehicle can be fully utilized to generate, in conjunction with the vehicle data, the current environment information and the user need, an image that can be more in line with the user's intention. The generated image is a personalized image generated according to the user need, rather than a simple image irrelevant to the user, which not only improve the user's driving experience, but can also enhance the link between the vehicle and the user, making each trip full of fun and excitement. In addition, the presence of image layers allows for a more targeted adjustment to the generated image, which can improve the efficiency and accuracy of image generation.

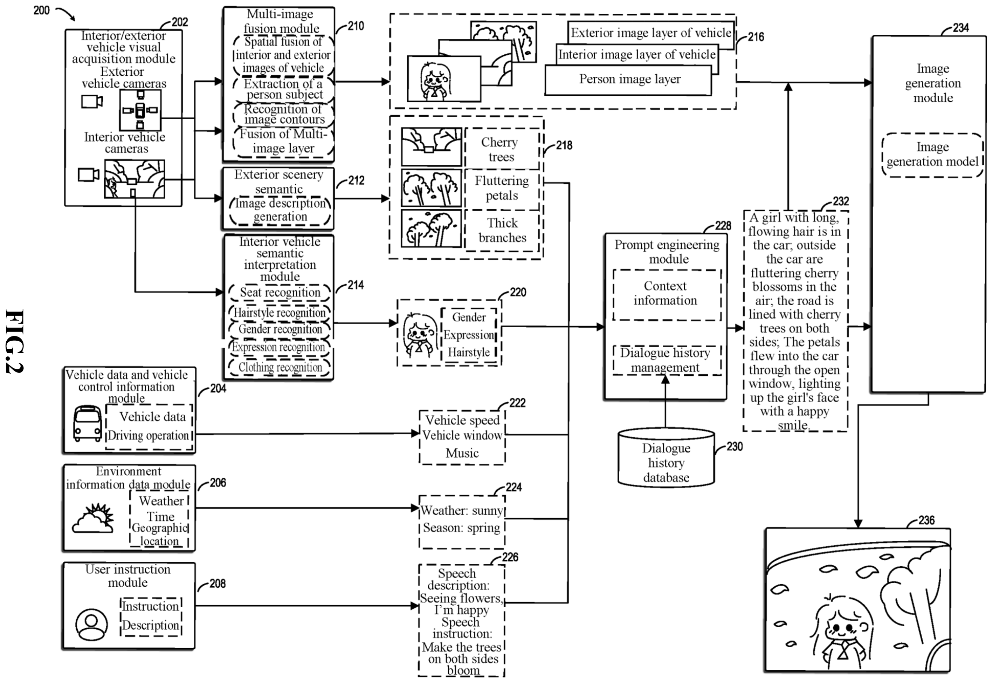

Fig. 2 illustrates a schematic diagram of a process of generating an image according to some embodiments of the present disclosure. As shown therein, an in-vehicle/out-of-vehicle visual acquisition module 202 can acquire images of the interior and exterior environments of a vehicle, for example, interior images of the vehicle and exterior images of the vehicle, using a plurality of sensors deployed inside and outside the vehicle (for the plurality of sensors in Fig. 2, cameras are taken as an example only, rather than a limitation). The out-of-vehicle sensors can be deployed around the vehicle to acquire images above, under, on the left and right sides of, ahead of, and behind the vehicle, to obtain exterior images of the vehicle, for example, images of surroundings. The in-vehicle sensors can be deployed at key positions within the vehicle, for example, the steering wheel, dashcam, dashboard, doors, and the like. The in-vehicle sensors can acquire images of the interior environment of the vehicle, for example, an in-vehicle person image, and an interior environment image of the vehicle. It would be appreciated that the deployment positions of sensors can be set according to the acquisition need and the image generation need. In some embodiments, in order to enrich the image content, images can be acquired by a user terminal to provide assistance in image generation, where the images acquired by the user terminal may include an exterior image of the vehicle, and a selfie taken by a user.

In some embodiments of the present disclosure, in order to generate a more personalized image, image recognition and processing can be performed on the interior and exterior environment images of the vehicle, to obtain an image 216 including a plurality of image layers. A multi-image fusion module 210 can be used to perform image recognition and processing on interior and exterior images of the vehicle to separate a person subject from the environment and differentiate the interior and exterior environment of the vehicle, thus obtaining a plurality of corresponding image layers (e.g., an exterior image layer of a vehicle, an interior image layer of a vehicle, a person image layer, and the like). The different image layers contain information on different structures at different positions. For example, the person layer can be determined based on a selfie taken by a user via a user terminal and interior images of the vehicle acquired by the in-vehicle sensors, which includes features of a person, where the features of a person may include, but are not limited to, a facial expression, a body movement, a hairstyle, a skin color, clothing, gender, and the like. In some embodiments, the person region and the vehicle region in the image 216 can be separated, to obtain a person image layer. For example, by performing person recognition on an image, an image layer corresponding to a person included in the image can be determined. After the person image layer is determined, facial features and posture features of the person can be recognized.

In some embodiments of the present disclosure, by adding labels or annotations to elements in different image layers to differentiate the respective image layers, it can be ensured that a relative position of each image in the entire scene conforms to the laws of the real world, to facilitate a subsequent adjustment to a corresponding image layer. For example, based on a source of a camera corresponding to the image 216, a spatial position of each image in the image 216 can be labeled. For example, different orientations (e.g., front, rear, left and right) of the exterior images of the vehicle, and the spatial relationships and relative positions of the interior images of the vehicle can be labeled, so as to determine a plurality of image layers (e.g., an exterior image layer of the vehicle, and an interior image layer of the vehicle).

In an example, an image 1 can be acquired using a camera 1 (disposed on the left side of the vehicle), an image 2 can be acquired using a camera 2 (disposed in front of the vehicle), an image 3 can be acquired using a camera 3 (disposed on the right side of the vehicle), and an image 4 can be acquired using a camera 4 (disposed at the steering wheel within the vehicle). Based on identification information of the camera 1, the camera 2, the camera 3, and the camera 4, it can be determined that the boundaries of the image 1 and image 2 are adjacent, the boundaries of the image 2 and image 3 are adjacent, and the image 4 is located within the vehicle. In other embodiments, key contours in the images can be identified using the edge detection technique, including edges of an exterior scene of the vehicle, boundaries of an interior structure of the vehicle, and a contour of a person. Based on the information, the position relationships and the spatial relationships between the images can be determined.

In some embodiments of the present disclosure, after the edge information corresponding to the plurality of image layers is determined, the plurality of image layers can be fused to obtain a fused image. For example, in conjunction with edge information and the corresponding labels of the image layers, adjacent images can be stitched and fused to obtain a corresponding fused image. The fused image can be input into an image generation model 234, and the image generation model 234 then can generate a corresponding image 236 based on the fused image. The fused image is substantially a "base image" of the generated image.

In some embodiments of the present disclosure, in order to improve the accuracy of the generated image and make the generated image satisfactory, various reference information can be input into the image generation model 234, and the image generation model 234 then can generate, based on the various reference information and the fused image, an image 236 that meets the user need. The image generation model 234 can adjust, based on the various reference information, the generated image to obtain a final image 236 in line with the need.

In an embodiment, the reference information may be a vehicle status, where the vehicle status may include vehicle data (information directly related to the operating status of a vehicle, such as a battery level, a vehicle speed, and the like), and vehicle control unit information 204. For example, based on the vehicle speed, the dynamic nature of the generated image can be adjusted. If a vehicle is traveling at a high speed, the generated image is more dynamic and full of a sense of speed; if a vehicle is traveling at a low speed or parked, the generated image is static and full of more details. In addition, the image generation model can also adjust the image based on a battery level or fuel level of the vehicle. For example, if the fuel or battery level of the vehicle is low, the generated image may be relatively dark and slow. This may be somewhat a reminder to the user to charge or refuel the vehicle in time. In other embodiments, the vehicle status may further include vehicle control unit data, media resource data and driving operation data. For example, if the steering wheel is turned at a great angle, the image generation model 234 can add a curve to the generated image, so that the generated image is more in line with the actual condition, which can provide the vehicle users with an immersive travel experience.

In some embodiments of the present disclosure, the reference information may further include environment data 206 of the vehicle, which can be used to represent various data of, or related to, a current environment where the vehicle is located, for example, including, but not limited to, weather data, seasonal data, and geographic location data (the geographic location data may include feature data of a position where the vehicle is currently located, for example, a city/rural area, a landmark, an latitude, and the like). For example, if the vehicle is traveling in a winter evening, an element of a snow-capped mountain at sunset can be added to the generated image; or if the vehicle is traveling in the city center, relatively dense urban buildings can be added to the generated image.

In some embodiments of the present disclosure, the user's feeling is of the most importance. In order to make the generated image in line with the user's preferences, it is required to add the user need to the image generation process as a base for adjusting or generating an image. For example, the generated image or a single image layer thereof can be adjusted based on information input by the user 208. For example, features or an appearance of a person or an environment in the image can be adjusted according to the user need, to generate ultimately a unique image tailored to the user. In some embodiments, the user need can be determined based on the information input by the user 208. For example, the user can input his/her need (e.g., a desired image style, the user's mood, and the like) through speech, text, gesture, touch, and the like. In an example, the user can directly express his/her emotions and mood at a moment. Alternatively, the user can also input a specific adjustment instruction to modify a specific layer. By way of example, the user may request that a specific natural landscape be displayed in the generated image, for example, "make the withered trees blossom on the road I'm driving through," or the user may request "make the background color darker." The input information can directly impact the content and the expression of the final generated image.

In some embodiments of the present disclosure, in order to make full use of the acquired images, a generative model (e.g., an exterior scenery semantic interpretation module 212, and an interior semantic interpretation module of a vehicle 214) can be used to analyze the acquired images, to determine an image description corresponding to the image. For example, the image description 218 may include: at this time, the vehicle is traveling on a cherry blossom road, with lush cherry trees lining both sides of the road, and petals are fluttering in the wind, creating a sea of pink. In other embodiments, features of the person image layer can also be extracted, to further determine various features 220 corresponding to the person image layer, for example, gender, an expression, a hairstyle, and a position (a position where the person is located in the vehicle, or whether the person is in the driver's seat, or the like).

It would be appreciated that information generated by the exterior semantic interpretation module 212, the interior semantic interpretation module of a vehicle 214, the vehicle data and vehicle control information module 204, the environment information data module 206, and the user instruction module 208 can be input into a prompt engineering module 228, and the prompt engineering module 228 integrates the information generated by the respective modules mentioned above as a prompt 232 to be input into the image generation model 234. For example, the prompt 232 may be "a girl with long, flowing hair is in the car; outside the car are fluttering cherry blossoms in the air; the road is lined with cherry trees on both sides; the petals flew into the car through the open window, lighting up the girl's face with a happy smile."

In some embodiments of the present disclosure, generating the prompt 232 in the prompt engineering module 228 may include, but is not limited to, automatic generation, and style predefinition. The automatic generation may include pre-training a generative text-based large language model to automatically generate, based on input context information, a prompt that matches a scene. In some embodiments of the present disclosure, in order to improve the prompt generation efficiency, different image styles can be preset according to the actual condition. According to a user input, an image style matching the input can be selected from a plurality of image styles. For example, according to the user need, the user can input generalized instruction information such as "make the image color brighter," "make the landscape as the focus and the person as the secondary element in the image," or the like. The instruction information can be used to assist the image generation model 234 in generating an image of a specified style.

In some embodiments of the present disclosure, the user may modify the image multiple times, or provide a new user instruction based on the previous one to adjust the image. Dialogue history management in the prompt engineering module 228 can be used, which can interact with a dialogue history database 230 to store and manage information on multiple interactions of the user. When the user expects to continue to adjust the generated image after an interaction, fine-tuning can be performed based on a dialogue history. Based on the instruction information 232 generated by the prompt engineering module 228, at least one image layer is adjusted, and the generated final image 236 contains all the features specified by the user, which can fully reflect the user's personalized need, which may include, for example, facial features of a female user, a sense of speed in a driving scenario, color matching, expression of feelings, and the like. All those details can be displayed clearly in the image 236.

In this way, in the process of image generation, an image in line with the user need can be generated in conjunction with a user input, a vehicle status, and vehicle surroundings. Since is the image is generated based on richer and more diverse information, the generated image can be more in line with the current context, exhibiting enhanced richness and a greater sense of depth, thus improving the user's driving experience.

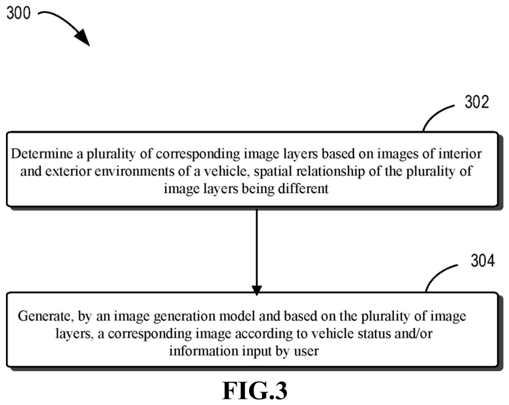

Reference below will be made to Fig. 3 to describe a flowchart of a method 300 for generating an image according to embodiments of the present disclosure. It is worth noting that the method 300 according to embodiments of the present disclosure can be implemented at the processor 108 as shown in Fig. 1, in particular at an image generation model 116. In addition, with the continuous development and innovation of smart vehicles and smartphones, more and more vehicles and mobile devices have computing capabilities (e.g., a smart vehicle, and a smartphone). In other words, the method 200 according to the embodiments of the present disclosure can be performed at the vehicle 102, rather than limited to being performed at the processor 108. The present disclosure is not limited thereto.

As shown therein, in block 302, the method 300 includes determining, based on images of interior and exterior environments of a vehicle, a plurality of corresponding image layers, where spatial relationships of the plurality of image layers are different. For example, image acquisition devices can be used to acquire images of the interior and exterior environment of the vehicle. The image acquisition devices can be deployed on a vehicle, for example, on the left or right side of, in front of, and behind the vehicle, as well as at the dashboard, an air conditioner vent, and the like. The image acquisition devices deployed at different positions can be used to acquire different images. For example, the image acquisition devices not inside the vehicle can acquire images of the interior environment of the vehicle. It would be appreciated that, based on sources of images (e.g., a specific image acquisition device from which an image is sourced), the acquired images can be simply divided into a plurality of image layers, for example, an exterior image layer of a vehicle, and an interior image layer of a vehicle, and positional relationships between the image layers can be determined.

In some embodiments of the present disclosure, an image may contain multiple objects, for example, a person, and a background (e.g., an internal structure of a vehicle, traffic signs in the surroundings of the vehicle, lane markings, and the like). On this basis, further image recognition can be performed on the acquired image, to separate a person image layer therefrom. Wherein, the person image layer may be an image layer containing vehicle users (e.g., a driver, a front passenger, rear passengers, and the like).

In block 304, the method 300 includes generating, by an image generation model and based on a plurality of image layers, a corresponding image according to a vehicle status and/or information input by a user. Wherein, the vehicle status can be used to characterize various statuses which a vehicle is currently in, for example, a traveling status of the vehicle, a user's driving operation, and a status of a vehicle control component. The vehicle driving status may include, but is not limited to, a traveling speed, an acceleration, a traveling direction, a traveling mode, and the like. The status of the vehicle control component may include a status of an air conditioner, ambient light, or a vehicle window.

In some embodiments of the present disclosure, the information input by a user includes a user need (e.g., a preferred style, an element to be added, or the like), user's emotions, or user experience. For example, the user can input information via an in-vehicle system or a terminal device in communication with the vehicle. The user can input information in multiple ways, for example, including, but not limited to, a speech input, a touch operation, a gesture input, biometric identification (e.g., fingerprint or facial recognition), or the like. In other embodiments, the information input by the user may include an editing or adjustment instruction for the generated image or an image layer. For example, the user may make a request to display a specific landscape in the generated image, or add or remove a specific element.

In some embodiments of the present disclosure, the image generation model may be a model trained with a large amount of training data, which can complete a specific task. In some embodiments, the image generation model can be fine-tuned, to enable the image generation model to implement various natural language processing tasks, for example, text generation, code generation, video generation, text question answering, image generation, academic paper writing, and the like. In some embodiments, the image generation model may be essentially an image-to-image model, which can generate a new realistic image from input images. In some examples, the image generation model may include, but is not limited to, a generative adversarial network, a variational autoencoder, a diffusion model, or the like.

In some embodiments of the present disclosure, the image generation model can generate an image in line with the need based on a plurality of image layers in conjunction with a vehicle status and/or a user input. It would be appreciated that, if the images input to the image generation model are in the form of multiple image layers, the generated image may include a plurality of image layers. The plurality of images layers can correspond to the plurality of original image layers, and a corresponding generated image can be obtained by fusing the plurality of image layers. In other embodiments, the plurality of original images can be fused to obtain a fused image, and the image generation model then can generate a corresponding image based on the fused image.

It would be appreciated that, in the process of image generation, the vehicle status and the user input can serve as a generation or adjustment basis, such that the generated image can be in line with the vehicle status, and meet the user need. In some embodiments, the image generation model can directly generate an image in line with the need based on the plurality of original image layers, the vehicle status, and the user input. In other embodiments, the image generation model can generate a plurality of image layers based on the plurality of original image layers, adjust a specific image layer based on the vehicle state and the user input, and generate an image in line with the need based on the adjusted image layer.

In this way, in conjunction with the multi-view images about the interior and exterior of the vehicle and the status information of the vehicle, a variety of materials and reference bases can be provided for image generation. In addition, information input by the user can be taken into consideration in the process of image generation, which allows for further customization of images, thus making it better meet the user's needs and be more in line with the user preferences. Since a plurality of image layers can provide materials for image generation from multiple dimensions, existence of the plurality of image layers enables image generation or adjustment to be more flexible and targeted.

In some embodiments of the present disclosure, after a plurality of images are acquired, the images can be classified based on sources of the images, and image layers under each type can be determined. For example, the images can be divided into an exterior image layer of a vehicle, an interior image layer of a vehicle, and a person image layer. Relative positional relationships are varied between different image layers.

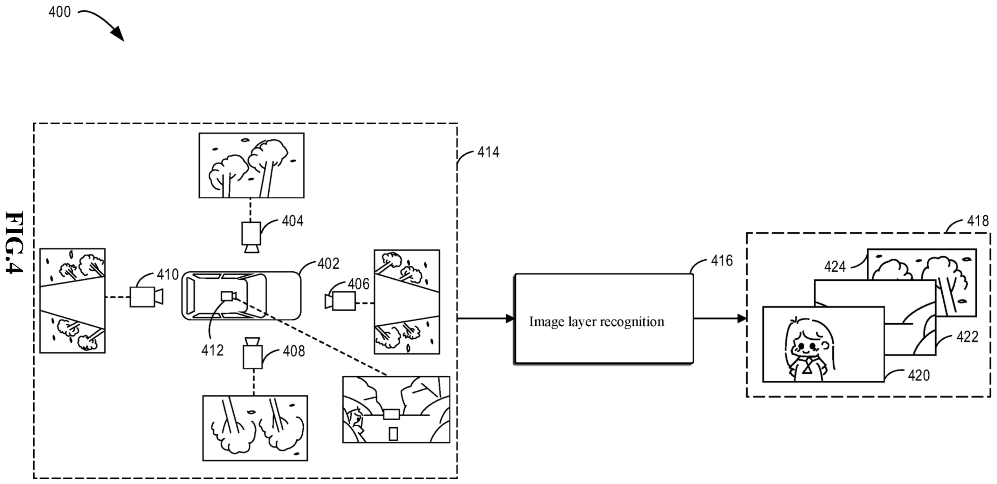

Fig. 4 illustrates a schematic diagram of determining a plurality of image layers according to some embodiments of the present disclosure. As shown therein, labels can be assigned to a camera 410 (disposed at the rear of vehicle) and a camera 412 (disposed on a driving recorder inside the vehicle) deployed at different positions of the vehicle, so that the acquired images carry identification information corresponding to the respective cameras. Specific positions where a plurality of sub-environment images in the environment image are respectively located, and spatial positional relationships between the images can be determined based on the identification information, to ensure that, during subsequent image layer generation, a relative position of each image in the whole scene conforms to the laws of the real world, thus forming a basis for subsequent image fusion. The plurality of images acquired by the plurality of cameras can be input into an image layer recognition device 416, and the image layer recognition device 416 then can determine a plurality of corresponding image layers 418 based on the plurality of images. For example, images acquired by cameras deployed on the exterior of the vehicle can be used as an exterior image layer of a vehicle 424, and since the exterior of the vehicle has multiple orientations (e.g., front, rear, left, right, and the like) with respect to the vehicle, the exterior image layer of the vehicle a located on the left side of the vehicle, an exterior image layer of a vehicle b located on the right side of the vehicle, and an exterior image layer of a vehicle c located in front of the vehicle in the exterior image layer of a vehicle 424 can be determined based on the identification information of the cameras. It would be appreciated that the exterior image layer of a vehicle a, the exterior image layer of a vehicle b and the exterior image layer of a vehicle c collectively form a complete exterior layer of a vehicle. For example, the exterior image layer of a vehicle a and the exterior image layer of a vehicle c adjacent to each other can be fused, and the exterior image layer of a vehicle b and the exterior image layer of a vehicle c adjacent to each other can be fused, to obtain the exterior image layer of a vehicle 424.

Referring to Fig. 4, in some embodiments of the present disclosure, a plurality of images acquired by cameras deployed within the vehicle can be used as an interior image layer of a vehicle 422. Since vehicle users are on seats of the vehicle, the interior image layer of a vehicle 422 may contain a person. Therefore, the image layer recognition device 416 can recognize a body contour of a person in the interior image layer of a vehicle 422 and boundaries of the internal structure of the vehicle. On the basis, the person can be separated from the interior image layer of a vehicle 422, to obtain a person image layer 420 only containing a person.

In this way, interior and exterior images of the vehicle captured by a plurality of image acquisition devices can be processed efficiently, and can be decomposed to generate a plurality of corresponding image layers, to enable more accurate location of a target image layer during subsequent image layer adjustment and image fusion. Further, this can also meet the user need for obtaining a personalized and unique image while avoiding generation of a repeated and monotonous image and ensuring that each generated image is personalized and creative.

In some embodiments of the present disclosure, before input into the image generation model, the plurality of original image layers can be fused to obtain a fused image. For example, an exterior scene and a person within the vehicle can be fused on the same image. In an example, a plurality of original image layers (e.g., an exterior scenery layer of a vehicle, an interior environment image layer of a vehicle, and a person image layer) can be integrated, and it is guaranteed that the respective edges thereof are clear and natural. It would be appreciated that, in the process of generating a plurality of image layers, identification information can be added to the original image layers based on sources of the original image layers, where the identification information can be used to uniquely represent types of the original image layers. For example, different colors, labels, or the like can be used to label different image layers. In other words, the plurality of original image layers included in the fused image also include the respective identification information. The image generation model can generate an image embodying a "real space" based on the fused image. The image may also include multiple types of image layers, where different image layers are added with different labels. As such, the image generation model can be guided with different adjustment suggestions to adjust content of a specific image layer. For example, a prompt of "change the view outside the vehicle" can be used to instruct the model to modify only the exterior scenery image layer of the vehicle in the generated image, without impacting other image layers.

In some embodiments of the present disclosure, the image generation model can generate a new corresponding image layer based on the plurality of input original image layers. For example, the image generation model can generate a new realistic "person image layer" based on the input original person image layer, or can generate a new realistic "exterior image layer of a vehicle" based on the input exterior image layer of the vehicle. This person image layer is similar to the original personal image layer in terms of style and elements. In an example, the image generation model can determine a feature of the original person layer (e.g., a facial feature, a clothing style, a background environment, and the like), and generate a new person image layer based on the characteristic. A person in the person image layer corresponds to the person in the original image layer in terms of hair style, expression or clothing. For example, a feature extraction model such as a Convolutional Neural Network (CNN), a deep learning model, or the like can be used to extract a feature of the input person image layer. The feature is used as a basis for adjusting the generated person image layer.

In some embodiments of the present disclosure, in order to further improve the efficiency and the accuracy of adjusting the image layer, the original image layer can be semantically interpreted as an adjustment basis. For example, a Vision-Language Pre-training (VLP) model can be used to interpret the input image layer, and determine a semantic description corresponding to the image layer. Wherein, an image-to-text conversion model may include, but is not limited to, a Contrastive Language-Image Pre-training (CLIP) model, or a Bootstraping Language Image Pre-training (BLIP) model. In some embodiments of the present disclosure, the semantic description may include not only descriptions of objects and a corresponding scene, but also relationships between objects (e.g., spatial and logical relationships) in this image layer. By way of example, in an example, the semantic description of the exterior image layer of the vehicle may include "there are a lake on the left side of the vehicle, and a swan beside the lake" and "distant mountain peaks are capped with snow." The semantic description can be used to describe an overall layout, a composition or a perspective relationship of the image layers. On the basis, the semantic description can act as a basis for adjusting, by the image generation model, the generated exterior image layer of the vehicle. For instance, a swan element is added to the generated exterior image layer of the vehicle.

In this way, the highly precise semantic interpretation of the input original image layer serves as a basis for adjusting the generated image layer, which is not only helpful for improving the efficiency of image layer adjustment, but can also ensure the adjustment accuracy, making the adjusted image layer more in line with the users' aesthetic expectations and visual experience.

In some embodiments of the present disclosure, the semantic interpretations of the interior image layer of the vehicle and the person image layer can also serve as a basis for adjusting the generated interior image layer of the vehicle or person image layer. For example, the person image layer is interpreted, and a corresponding semantic description is generated based on a feature of the person image layer. The semantic description may include "a girl with long hair flowing freely in the wind is sitting in the driver's seat and holding a French bulldog." It would be appreciated that the semantic description corresponding to the original image layer has a higher priority, and can act as an important input for subsequent image generation, thus ensuring that the generated image or content is highly correlated with the actual characteristic of the user.

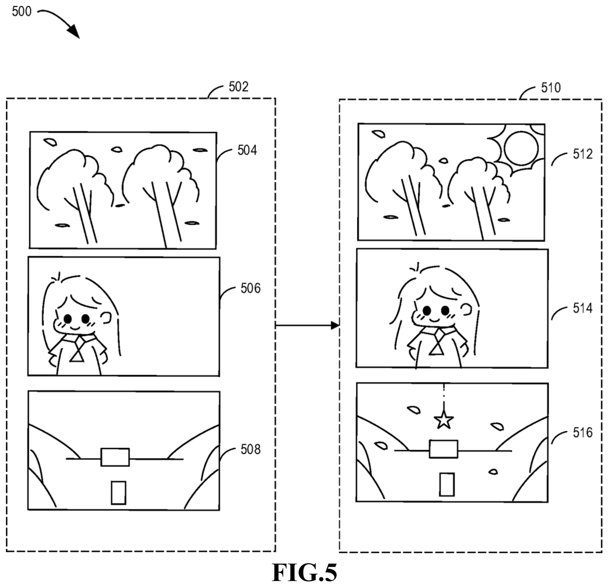

Fig. 5 illustrates a schematic diagram of adjusting a plurality of image layers according to some embodiments of the present disclosure. As shown therein, the image layer 502 before the adjustment may include an exterior image layer of a vehicle 504, a person image layer 506, and an interior image layer of a vehicle 508. A target image layer to be adjusted can be determined based on the vehicle status and the information by the user. The image generation model can adjust the target image layer based on the vehicle status and the information input by the user, to obtain the adjusted image layer 510 that includes the adjusted exterior image layer of a vehicle 512, person image layer 514, and interior image layer of a vehicle 516. For example, in some embodiments, when the vehicle travels at a high speed (with an open window), the impacts of the wind speed on the person and the environment can be used to convey a sense of speed in the generated image. On this basis, it can be determined that the target image layer to be adjusted is the person image layer 506. The image generation model can determine the adjusted person image layer 514 by adjusting the characteristic of the person in the person image layer 506. For example, the girl's long hair is flowing backwards in the adjusted person image layer 514, which can convey the sense of speed of the vehicle at that time. In other embodiments, some features in the exterior image layer of a vehicle 504, the person image layer 506 and the interior image layer of a vehicle 508 can be simultaneously adjusted to convey the speed of the vehicle. For example, the tree canopies in the exterior image layer of the vehicle sway backwards, creating a motion blur effect, and petals drift into the vehicle and flutter backwards in the wind.

In some embodiments of the present disclosure, the user can input his/her need according to the actual condition, for example, a desired style of a generated image, a specific element to be added, emotions, and the like. It would be appreciated that, if a user inputs his/her need of "make the weather warmer," it can be determined that the target image layer to be adjusted is the exterior image layer of a vehicle 504. The image generation model can add a sun into the exterior image layer of a vehicle 504 and soften the overall color tone thereof. The adjusted exterior image layer of a vehicle 512 can be determined accordingly. As would be appreciated, according to the user need, it can be determined that the image layer to be adjusted is the interior image layer of a vehicle 516. By adding some plush toys or cute decorations to the interior environment of the vehicle, changing the overall color tone, or the like, the adjusted image layer can be more in line with the user need. In this way, the image can be adjusted based on the vehicle data and the user need, which allows the user to participate in the image generation to a greater extent and thus results in a more personalized image.

In some embodiments of the present disclosure, historical images are typically images that satisfy the user. For instance, styles corresponding to the historical images or elements contained therein are all in line with user preferences and cater to user tastes. On this basis, a historical image is taken as an example, and a corresponding image is generated by an image generation model. The historical image can act as a reference, and the image generation model can generate an image similar to the historical image in terms of traveling scene, specific elements, layout, style, and the like. In an example, if the historical image contains a large amount of butterfly elements, the generated image may include butterfly elements. Alternatively, if a person in the historical image has long hair, the person in the generated image may also have long hair.

In some embodiments of the present disclosure, in the process of image generation, the user can adjust a dissatisfied part of the generated image by, for example, modifying the filter, adjusting a feature of a person, or the like. The user's adjustment style somehow reflects the user's preferences and recording or sharing habits. Therefore, a corresponding image can be generated by the image generation model based on historical dialogues between the user and the model, where the historical dialogues may include inputs, generated historical images and related prompts occurring in multiple interactions between the user and the model. In some embodiments of the present disclosure, if a user desires to adjust the generated image after the last interaction, the image generation model can fine-tune the previously generated image based on the dialog history. For example, if the instruction input by the user is "slightly brightening the background based on the previous image," the image generation model can perform a relevant adjustment to the previously generated image to generate a new image.

In some embodiments of the present disclosure, environment data about an environment where the vehicle is currently located can also act as a base for the image generation model to generate an image or adjust an image layer, where the environment data may be weather data (e.g., sunny, rainy or snowy day, temperature, humidity, and the like). By way of example, the image generation model can adjust the visual representation of the generated image based on the weather data. For instance, for a sunny day, a bright sun can be added to the generated image; for a rainy day, a raindrop effect can be added to the generated image; for a snowy day, a snowflake effect can be added to the generated image.

In other embodiments, the environment data may also include season data, where season data relates to a weather background of a vehicle at a current moment, for example, including, but not limited to, four seasons (spring, summer, autumn, and winter). Different seasons have different feature elements, and the image generation model can add into the image a scene element that matches a feature of a season in the process of image generation. In an example, if the season is spring, the generated image may include a scene with bright sunshine and blooming flowers; if the season is summer, the generated image may include a bright and vibrant scene; if the season is autumn, the generated image may include fallen leaves and have a warm color tone.

In some embodiments of the present disclosure, the environment data may include time data that may be a time period where the vehicle is currently located, for example, morning, afternoon, evening, and the like. Different time periods correspond to different lighting effects. For example, at sunrise or sunset, the light is soft, and objects cast long shadows on the ground; in the evening, an element such as moonlight, starlight, artificial light, or the like, substitutes for sun light, resulting in a darker overall tone. On this basis, a lighting effect that matches the real world can be generated based on time data.

In some embodiments of the present disclosure, the environment data may further include a geographical location information of the vehicle at a current moment or within a preset time. It would be appreciated that the areas that the vehicle passes through have different geographical features. For instance, landscapes of the rural and urban areas are completely different, or the geographical features of the areas at different altitudes are also completely different. On this basis, the generated image or a certain image layer in the image can be adjusted based on the geographic location information of the vehicle. In an example, the exterior image layer of the vehicle in the image can be adjusted based on a landmark or an attraction that the vehicle passes through. For example, the landmark can be added to the exterior image layer of the vehicle as a background element.

In some embodiments of the present disclosure, the plurality of image layers can be adjusted correspondingly in multiple ways. For example, a certain element in the image layer, is adjusted (e.g., a certain element is added), or a certain feature of the image layer is adjusted (e.g., a hue or transparency of the layer is adjusted). The plurality of adjusted image layer corresponds to the image layer (the original image layer) before adjustments, i.e., each adjusted image layer retains original pixel information and position information thereof. Therefore, after the plurality of adjusted image layers are fused based on the relationships between the image layers, an image in line with the user need can be generated. For example, smoothing processing can be performed on edges of adjacent images based on edge features or boundaries of image layers, to generate images with a consistent style.

In some embodiments of the present disclosure, when the plurality of adjusted image layers are fused, the style of the generated image can be adjusted by adjusting the transparencies of the different image layers. In an example, the plurality of adjusted image layers may include an exterior scenery image layer of a vehicle, and a person image layer. The person image layer can be placed on the exterior scenery image layer of the vehicle, and the transparency, the size and the position of the person image layer can be adjusted, to enable the person image layer to match the background of the exterior scenery image layer of the vehicle, and make the overall style of the fused image consistent. In some embodiments, the smoothing processing can be performed on the edges between the person image layer and the exterior scenery image layer of the vehicle, to reduce the image incoherence after fusion. By adjusting parameters such as color, brightness, and the like, the overall style of the synthesized image becomes more consistent.

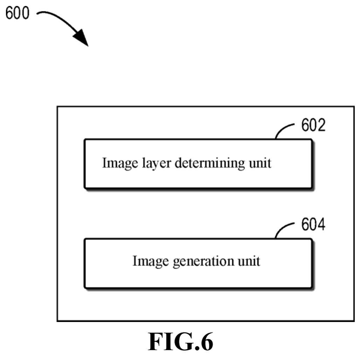

Fig. 6 illustrates a block diagram of a device 600 for generating an image according to some embodiments of the present disclosure. As shown therein, the device includes an image layer determining module 602 configured to determine, based on images of interior and exterior environments of a vehicle, a plurality of corresponding image layers, where spatial relationships of the plurality of image layers are different. The device 600 further includes an image generation module 604 configured to generate, by an image generation model and based on the plurality of image layers, a corresponding image according to a status of a vehicle and/or information input by a user.

In some embodiments, the image layer determining module 602 is further configured to: obtain, using a plurality of image acquisition devices, an environment image of surroundings of the vehicle, and an interior image of the vehicle corresponding to an interior of the vehicle; determine, based on the image corresponding to the interior of the vehicle, a person image corresponding to a user inside the vehicle; and generate the plurality of corresponding image layers based on the environment image, the interior image of the vehicle, and the person image corresponding to the user.

In some embodiments, the image layer determining module 602 is further configured to: determine, based on identification information of the plurality of image acquisition devices, a plurality of sub-environment images in the environment image for a plurality of directions, where the directions comprise front, rear, left, and right of the vehicle; and determine the plurality of corresponding image layers based on the plurality of sub-environment images, the interior image of the vehicle and the person image.

In some embodiments, the image generation module 604 is further configured to: generate, based on the plurality of image layers, a plurality of corresponding candidate image layers; determine, based on the status of the vehicle and/or the information input by a user, a target image layer to be adjusted in the plurality of candidate image layers; and adjust, by the image generation model, the target image layer, to generate the corresponding image.

In some embodiments, the apparatus 600 further includes an image layer adjustment module configured to: determine a type corresponding to the person image, and an image feature corresponding to the person image; and adjust the target image layer based on the type and the image feature, the target image layer comprising at least one image layer of the person image layer and the environment image layer.

In some embodiments, the image layer adjustment module is further configured to: adjust, based on the image feature, a person feature of the person image layer of the at least one image layer, where a person feature corresponding to an adjusted person image layer matches the image feature that comprises a facial feature, and a pose feature of the person; and adjust, based on the image feature, a feature of an environment in an interior environment image layer of a vehicle.

In some embodiments, the image layer adjustment module is further configured to: determine, based on the information input by the user, a corresponding key element and an image style; and adjust the target image layer based on the key element and the image style.

In some embodiments, the image layer adjustment module is further configured to: obtain environment information corresponding to the vehicle, where the environment information comprises weather information, time information and geographic location information; and adjust the target image layer based on the environment information, the status of the vehicle, and the information input by the user.

In some embodiments, the image layer determining module 602 is further configured to: obtain traveling data, driving data, media resource data, and corresponding vehicle control unit data of the vehicle; and determine the status of the vehicle based on the traveling data, the driving data, the media resource data, and the vehicle control unit data.

In some embodiments, the image generation module 604 is further configured to: determine a corresponding fused image by performing fusion of multi-image layer on the adjusted image layer; and generate, by the image generation model, the corresponding image based on the fused image.

In some embodiments, the image generation module 604 is further configured to: determine edge information corresponding to each image layer in the adjusted image layer; determine image layers with adjacent edges based on the edge information; and determine the corresponding fused image by fusing the image layers with the adjacent edges.

In some embodiments, the image layer adjustment module is further configured to: generate, by a language model, a text description corresponding to the images of the interior and exterior environments of a vehicle; and adjust the target image layer based on the text description.

In some embodiments, the image layer adjustment module is further configured to: obtain user's historical input information for a historical image; and adjust the target image layer based on the historical image and the historical input information.

It would be appreciated that the apparatus 600 according to the present disclosure can be used to attain at least one of the advantages that can be obtained by the method or process described above.

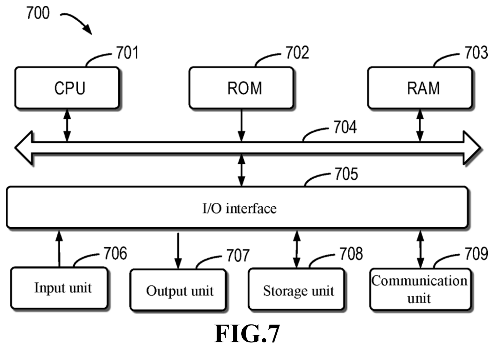

Fig. 7 illustrates a block diagram of an example device 700 that can be used to implement embodiments of the present disclosure. As shown, the device 700 includes a computing unit 701 which performs various appropriate actions and processing, based on computer program instructions stored in a Read-Only Memory (ROM) 702 or computer program instructions loaded from a storage unit 708 to a Random Access Memory (RAM) 703. The RAM 703 stores therein various programs and data required for operations of the device 700. The computing unit 701, the ROM 702 and the RAM 703 are connected via a bus 704 with one another. An input/output (I/O) interface 705 is also connected to the bus 704.

The following components in the device 700 are connected to the I/O interface 705: an input unit 706 such as a keyboard, a mouse and the like; an output unit 707 including various kinds of displays and a loudspeaker, etc.; a storage unit 708 including a magnetic disk, an optical disk, and etc.; a communication unit 709 including a network card, a modem, and a wireless communication transceiver, etc. The communication unit 709 allows the device 700 to exchange information/data with other devices through a computer network such as the Internet and/or various kinds of telecommunications networks.

The computing unit 701 may be various types of general purpose and/or dedicated processing components having a processing and computing capability. Some examples of the computing unit 701 include, but are not limited to, a Central Processing Unit (CPU), a Graphics Processing Unit (GPU), various types of dedicated Artificial Intelligence (AI) computing chips, various types of computing units having machine learning model algorithms run thereon, a Digital Signal Processor (DSP), any appropriate processor, controller, microcontroller, or the like. The computing unit 701 can execute various methods and processing described above, for example, the method 300. For example, in some embodiments the method 300 may be implemented as computer software programs that are tangibly included in a machine readable medium, e.g., the storage unit 708. In some embodiments, part or all of the computer programs may be loaded and/or installed onto the device 700 via ROM 702 and/or communication unit 709. When the computer program is loaded to the RAM 703 and executed by the computing unit 701, one or more steps of the method 300 as described above can be executed. Alternatively, in other embodiments, the computing unit 701 may be configured in any other appropriate manners (for example, by means of firmware) to perform the method 300.

The functions described herein can be performed, at least in part, by one or more hardware logic components. For example, and without limitation, illustrative types of hardware logic components that can be used include Field-Programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and the like.

Program code for carrying out methods of the present disclosure described herein may be written in any combination of one or more programming languages. These program codes may be provided to a processor or controller of a general purpose computer, dedicated computer, or other programmable data processing apparatus, so that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of this disclosure, a machine readable medium may be any tangible medium that may contain, or store a program for use by or in combination with an instruction execution system, apparatus, or device. The machine readable medium may be a machine readable signal medium or a machine readable storage medium. A machine readable medium may include but not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the subject matter described herein. Certain features that are described in the context of separate implementations may also be implemented in combination in a single implementation. Conversely, various features that are described in the context of a single implementation may also be implemented in multiple implementations separately or in any suitable sub-combination.

Although the subject matter has been described in language specific to structural features and/or methodological actions, it is to be understood that the subject matter specified in the appended claims is not necessarily limited to the specific features or actions described above. Rather, the specific features and actions described above are disclosed as example forms of implementing the claims.

## Claims

1. A method (300) for generating an image, comprising:
determining (302), based on images of an interior and exterior environment of a vehicle, a plurality of corresponding image layers, spatial relationships of the plurality of image layers being different;
generating (304), by an image generation model and based on the plurality of image layers, a corresponding image based on a status of the vehicle and/or information input by a user.

2. The method of claim **1,** wherein determining (302), based on the images of the interior and exterior environment of the vehicle, the plurality of corresponding image layers comprises:
obtaining, using a plurality of image acquisition devices, an environment image of surroundings of the vehicle, and an interior image of the vehicle corresponding to an interior of the vehicle;
determining, based on the interior image corresponding to the interior of the vehicle, a person image corresponding to a user inside the vehicle; and
generating the plurality of corresponding image layers based on the environment image, the interior image of the vehicle, and the person image corresponding to the user.

3. The method of claim 2, wherein determining (302) the plurality of corresponding image layers comprises:
determining, based on identification information of the plurality of image acquisition devices, a plurality of sub-environment images for a plurality of directions in the environment image, the directions comprising one or more of: front, rear, left, and right of the vehicle; and
determining the plurality of corresponding image layers based on the plurality of sub-environment images, the interior image of the vehicle, and the person image.

4. The method of claim 2 or 3, wherein generating (304), by the image generation model and based on the plurality of image layers, the corresponding image comprises:
generating, based on the plurality of image layers, a plurality of corresponding candidate image layers;
determining, based on the status of the vehicle and/or the information input by the user, a target image layer to be adjusted of the plurality of candidate image layers; and
adjusting, by the image generation model, the target image layer, to generate the corresponding image.

5. The method of claim 4, wherein adjusting the target image layer comprises:
determining a type corresponding to the person image, and an image feature corresponding to the person image; and
adjusting the target image layer based on the type and the image feature, the target image layer comprising at least one image layer of a person image layer, or an environment image layer.

6. The method of claim 5, wherein adjusting the target image layer further comprises:
adjusting, based on the image feature, a person feature of the person image layer of the at least one image layer, wherein a person feature corresponding to the adjusted person image layer matches the image feature that comprises a facial feature, and a pose feature of a person; and
adjusting, based on the image feature, an environment feature in an image layer of the interior environment of the vehicle.

7. The method of any one of claims 4 to 6, wherein adjusting the target image layer comprises:
determining, based on the information input by the user, a corresponding key element and a corresponding image style; and
adjusting the target image layer based on the key element and the image style.

8. The method of any one of claims 4 to 7, wherein adjusting the target image layer comprises:
obtaining environment information corresponding to the vehicle, the environment information comprising weather information, time information and geographic location information; and
adjusting the target image layer based on the environment information, the status of the vehicle, and the information input by the user.

9. The method of any one of claims 1 to 8, further comprising:
obtaining traveling data, driving data, media resource data, and corresponding vehicle control unit data of the vehicle; and
determining the status of the vehicle based on the traveling data, the driving data, the media resource data, and the vehicle control unit data.

10. The method of any one of claims 4 to 8, wherein generating (304) the corresponding image comprises:
determining a corresponding fused image by performing fusion of multi-image layers on adjusted image layers, to determine a corresponding fused image; and
generating, by the image generation model, the corresponding image based on the fused image.

11. The method of claim 10, wherein determining the corresponding fused image comprises:
determining edge information corresponding to each image layer of the adjusted image layers;
determining image layers with adjacent edges based on the edge information; and
determining the corresponding fused image by fusing the image layers with the adjacent edges.

12. The method of any one of claims 4 to 8, wherein adjusting the target image layer comprises:
generating, by a language model, a text description corresponding to the images of the interior and exterior environment of the vehicle; and
adjusting the target image layer based on the text description;
wherein the method in particular further comprises:
obtaining historical input information of the user for a historical image; and
adjusting the target image layer based on the historical image and the historical input information.

13. An apparatus (600) for generating an image, comprising:
an image layer determining module (602), configured to determine, based on images of an interior and exterior environment of a vehicle, a plurality of corresponding image layers, spatial relationships of the plurality of image layers being different;
an image generation module (604), configured to generate, by an image generation model and based on the plurality of image layers, a corresponding image based on a status of the vehicle and/or information input by a user.

14. An electronic device, comprising:
at least one processor; and
a memory coupled to the at least one processor and having instructions stored thereon, wherein the instructions, when executed by the at least one processor, cause the electronic device to perform the method of any of claims 1-12.

15. A computer program product tangibly stored on a computer readable medium and comprising machine executable instructions that, when executed, implement the method of any of claims 1-12.
